# EUROPEAN PATENT APPLICATION

(11) **EP 4 625 682 A1**
(43) Date of publication of application: **01.10.2025**
(21) Application number: 24900874.9
(22) Date of filing: 05.11.2024
(51) Int. Cl.: H01M 50/581, H01M 50/244, H01M 50/247

(54) **EASILY DETACHABLE BATTERY PACK**

(30) Priority: 05.12.2023 KR 20230174917
(71) Applicant: LG Energy Solution, Ltd., Seoul 07335 (KR)
(72) Inventor: KANG, Dong Myung, Daejeon 34122 (KR)
(74) Representative: Plasseraud IP
(86) International application number: PCT/KR2024/017306
(87) International publication number: WO 2025/121687

(57) **Abstract**

Disclosed is an easily removable battery pack, and more particularly a battery pack including a battery cell having a first electrode and a second electrode; a first connector extending from the first electrode, and one side of the first connector being electrically connected to the first electrode; a first terminal connected to another side of the first connector; a second connector extending from the second electrode, and one side of the second connector being electrically connected to the second electrode; a second terminal connected to another side of the second connector; a third connector extending from the first connector, and one side of the third connector being connected to a part of the first connector; and a third terminal connected to another side of the third connector, wherein the third connector includes an electrostatic force load element.

## Description

### [Technical Field]

This application claims the benefit of priority to Korean Patent Application No. 2023-0174917 filed on December 5, 2023, the disclosure of which is incorporated herein by reference in its entirety.

The present invention relates to an easily removable battery pack. More particularly, the present invention relates to a battery pack that can be easily removed by inducing heating by short circuit and thus forcibly expanding the battery pack when replacing the battery pack attached to a device.

### [Background Art]

Conventional mobile phones have batteries that can be replaced by users. The batteries substantially include pouch-shaped batteries or prismatic batteries and are separate battery packs each having an outer case made of plastic. Users can easily replace the batteries after disassembling the mobile phones.

A small electronic device, such as a smartphone, using a pouch-shaped battery is manufactured in the form in which the pouch-shaped battery is embedded therein. It is also not easy to disassemble a case of the small electronic device welded using ultrasonic waves or a laser for waterproof and dustproof purposes. In some cases, the embedded battery pack or pouch-shaped battery is connected to a PCB base as an internal component. It is also difficult to separate the pouch-shaped battery from the electronic device, since an adhesive or a string-shaped adhesive tape is added to one surface of the pouch-shaped battery for internal fixing. In the process of separating the pouch-shaped battery from the electronic device, there is also a risk that the pouch-shaped battery may be physically damaged and fire may occur in the pouch-shaped battery.

Recently, electronic devices, including smartphones, have been designed in such a way that it is very difficult for users to replace batteries by themselves. When a battery reaches end of life, it is common to replace the battery by repairing the entirety of an electronic device or to replace the electronic device.

Repairing or replacing the entirety of the device is not desirable from a recycling and environmental perspective, even though only the battery can be replaced and the device can continue to be used. In recent years, regulations in Europe and elsewhere have been revised to make it easier for users to replace pouch-shaped batteries, even though they are embedded.

Batteries embedded in smartphones are often in the form of battery packs, in each of which a pouch-shaped battery is provided with a protection circuit and is wrapped with a film. In the case of very simple small devices, a pouch-shaped battery is directly connected to an electronic device without any protection circuit. Although not in the form of a battery pack, there is also the case where a simple protection circuit is attached to a pouch-shaped battery. A battery pack mentioned in the present invention is characterized in that the battery pack is easily removed, and to this end, a basic circuit must be configured. In the present invention, not only a conventional battery pack but also a single pouch-shaped battery having a simple circuit attached thereto is referred to as a battery pack.

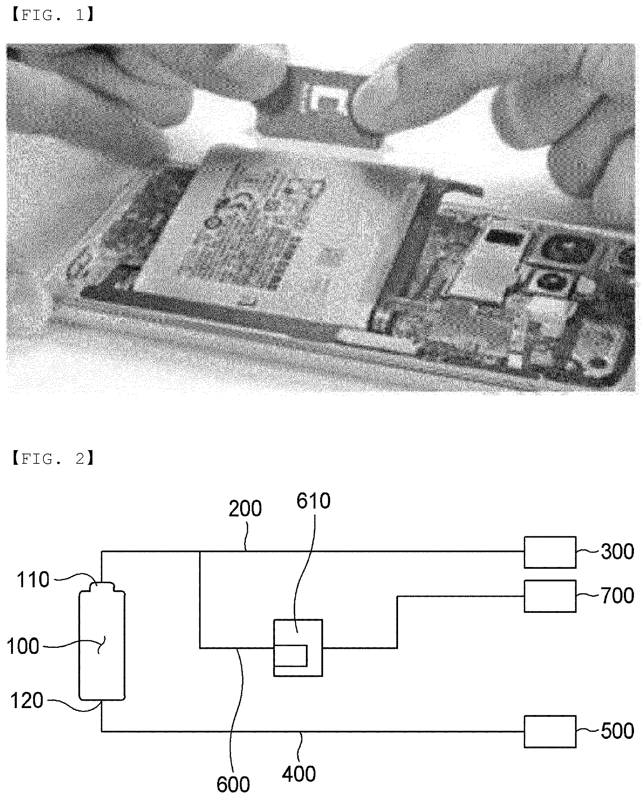

FIG. 1 is a perspective view showing a conventional battery pack and a tape for removal attached thereto. A separate tape for removal is attached to a battery pack such that a user can easily replace the battery pack. When a connection portion of the battery pack has a protrusion part on an upper surface (xz plane), the tape for removal is attached to the front, both sides, and the rear of the battery pack so as to wrap therearound. A handle is provided on one surface of the tape for removal to enable the user to easily remove the tape for removal. Since the tape for removal is used to remove the battery pack, the adhesive force of the tape for removal is not high, and the adhesive forces at the front, both sides, and the rear may differ from each other. An adhesive or adhesive tape for fixing the battery pack to an electronic device is attached to the tape for removal. That is, when the tape for removal is removed from the battery pack while holding the handle, the adhesive or adhesive tape for fixing the battery pack to the electronic device is also removed. This allows the battery pack to be easily removed from the electronic device.

The tape for removal must be separately attached to the battery pack, and although some processes such as rear attachment may be automated if a conveyor belt or the like is used, side and front attachment is manually performed since there is no separate method.

In addition, even though the tape for removal is attached, the adhesive force of the tape for removal to the battery pack and the adhesive force of the tape for removal to a fixing adhesive must be different from each other. These unevenly designed adhesive forces may fluctuate over time and may also be affected by the heat emitted by the electronic device, resulting in ineffective separation and removal.

Patent Document 1 discloses a seating unit on which a battery is seated, a first tape attachment device for attaching a tape to opposite side surfaces of the battery, a second tape attachment device for attaching a tape to an upper surface of the battery, a transfer rail for horizontally moving attachment members of the first and second tape attachment devices, and a worktable on which the first and second tape attachment devices are mounted.

In Patent Document 1, the tape is attached to the opposite side surfaces of the battery, but there is a problem that it is difficult to remove the battery if the tape is damaged when tension is applied to remove the battery.

Patent Document 2 discloses a battery pack including a positive electrode terminal, a negative electrode terminal, a plurality of positive electrode discharge terminals, and a plurality of negative electrode discharge terminals, but does not disclose a configuration corresponding to an electrostatic force load element that causes short circuit to expand the battery pack, thereby facilitating removal, as in the present invention.

Patent Document 2 discloses a battery pack having a load device for discharging electrostatic force, which is different from the electrostatic force load element that causes short circuit of the present invention.

### (Prior Art Documents)

(Patent Document 1) Korean Registered Patent Publication No. 2016756
(Patent Document 2) Korean Registered Patent Publication No. 1419113
(Patent Document 3) Japanese Patent Application Publication No. 2015-81773

### [Disclosure]

### [Technical Problem]

The present invention has been made in view of the above problems, and it is an object of the present invention to provide a battery pack that can be easily removed from an electronic device when replacement of the battery pack is required due to deterioration in performance and capacity.

It is another object of the present invention to provide a battery pack that can be easily removed without a separate tape for removal.

### [Technical Solution]

In order to accomplish the above objects, a battery pack according to the present invention includes a battery cell (100) having a first electrode (110) and a second electrode (120); a first connector (200) extending from the first electrode (110), and one side of the first connector being electrically connected to the first electrode; a first terminal (300) connected to another side of the first connector (200); a second connector (400) extending from the second electrode (120), and one side of the second connector being electrically connected to the second electrode; a second terminal (500) connected to another side of the second connector (400); a third connector (600) extending from the first connector (200), and one side of the third connector being connected to a part of the first connector; and a third terminal (700) connected to another side of the third connector (600), wherein the third connector (600) includes an electrostatic force load element (610).

The first electrode (110) may be a positive electrode, and the second electrode (120) may be a negative electrode.

The electrostatic force load element (610) may have substantially no resistance in a normal operation, and may be configured to cut off a current flowing in the third connector (600) when the amount of the current reaches a preset power amount.

The electrostatic force load element (610) may have substantially no resistance in a normal operation, and may be configured to cut off a current flowing in the third connector when the temperature of the battery cell reaches a preset temperature value.

The electrostatic force load element (610) may include a fuse configured to be broken at a certain temperature or higher.

A pull tape for separating the battery pack may be added.

The present invention provides a device including the battery pack.

The present invention provides a method of separating the battery pack from a device including the battery pack, the method including electrically connecting the second terminal (500) and the third terminal (700) to each other.

The second terminal (500) and the third terminal (700) may be electrically connected to each other via a separate connection member.

The third terminal (700) may be configured to be electrically connected only via the separate connection member.

In addition, the present invention may provide various combinations of the above solving means.

### [Advantageous Effects]

As is apparent from the above description, in the present invention, heat generation is induced due to short circuit caused by electrical connection between a second terminal and a third terminal, whereby a battery cell in a battery pack swells and thus the battery pack swells, and therefore, it is possible to easily separate the battery pack from an electronic device.

In addition, the present invention has the advantage that a conventional tape for removal is unnecessary and a connection member that is usable multiple times is provided, whereby it is possible to reduce the cost of replacing the battery pack.

### [Description of Drawings]

FIG. 1 is a perspective view showing a conventional battery pack and a tape for removal attached thereto.
FIG. 2 is a schematic view showing a battery pack according to a first embodiment of the present invention.
FIG. 3 is a schematic view showing a battery pack according to a second embodiment of the present invention.
FIG. 4 is a flowchart showing a method of separating the battery pack according to the embodiment of the present invention from a device including the battery pack.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an easily removable battery pack according to the present invention will be described with reference to the accompanying drawings.

FIG. 2 is a schematic view showing a battery pack according to a first embodiment of the present invention.

Referring to FIG. 2, the battery pack according to the first embodiment of the present invention includes a battery cell 100, a first connector 200, a first terminal 300, a second connector 400, a second terminal 500, a third connector 600, and a third terminal 700.

The battery cell 100 is a pouch-shaped battery cell, and includes a cell case configured to receive an electrode assembly (not shown) and a pair of electrode leads connected to a positive electrode tab and a negative electrode tab of the electrode assembly, respectively.

The cell case may be formed using a laminate sheet including an inner resin layer, a metal layer, and an outer resin layer.

The inner resin layer is in direct contact with the electrode assembly, and therefore the inner resin layer must exhibit high insulation properties and high electrolytic resistance. In addition, the inner resin layer must exhibit high sealability in order to hermetically isolate the cell case from the outside, i.e., a thermally-bonded sealed portion between inner layers must exhibit excellent thermal bonding strength.

The inner resin layer may be made of a material selected from among a polyolefin-based resin, such as polypropylene, polyethylene, polyethylene acrylic acid, polybutylene, or acid-modified polypropylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner resin layer, corresponds to a barrier layer configured to prevent moisture or various gases from permeating into the battery from the outside. An aluminum thin film, which is lightweight and easily shapeable, may be used as a preferred material for the metal layer.

The outer resin layer is provided at the other surface of the metal layer, and the outer resin layer may be made of a heat-resistant polymer that exhibits excellent tensile strength, resistance to moisture permeation, and resistance to air transmission such that the outer resin layer exhibits high heat resistance and chemical resistance while protecting the electrode assembly. As an example, the outer resin layer may be made of nylon or polyethylene terephthalate; however, the present invention is not limited thereto.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The negative electrode is manufactured by applying a slurry mixture of a negative electrode active material and a binder to a negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, a conductive agent and a binder may be further mixed with the negative electrode active material, and may be provided on the negative electrode current collector by coating.

The positive electrode is manufactured by applying a slurry mixture of a positive electrode active material and a binder to a positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

A conductive agent and a binder may be mixed with the positive electrode active material, and a filler may be further added if necessary.

The separator prevents a short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which the slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

In general, a pair of electrode leads constituted by a positive electrode lead and a negative electrode lead is electrically connected respectively to the tab bundles, more specifically the positive electrode tab bundle and the negative electrode tab bundle by welding or the like, and is exposed to the outside of the cell case.

Although a pouch-shaped battery cell is mentioned as one example in the present invention, other shapes of battery cells may be used and the present invention is not limited to the pouch-shaped battery cell.

A first electrode 110 may be provided on one side of the battery cell 100, and a second electrode 120 may be provided on the other side of the battery cell, wherein the first electrode 110 may be a positive electrode, and the second electrode 120 may be a negative electrode.

Although the first electrode 110 and the second electrode 120 are shown as being provided on opposite sides of the battery cell 100 in FIG. 2, the first electrode 110 and the second electrode 120 may be provided on one side of the battery cell so as to be spaced apart from each other by a preset distance as needed.

One side of the first connector 200 is connected to the first electrode 110 and the other side of the first connector is connected to the first terminal 300 in order to electrically connect the first electrode 110 and the first terminal 300 to each other. For example, the first connector may be a wire or a copper cable, and is not particularly limited as long as it is possible to electrically connect the first electrode 110 and the first terminal 200 to each other.

The first terminal 300 is connected to the first electrode 110 of the battery cell 100 received in the battery pack via the first connector 200, and is electrically connected to an external device to connect the battery cell 100 and the device to each other.

One side of the second connector 400 is connected to the second electrode 120 and the other side of the second connector is connected to the second terminal 500 in order to electrically connect the second electrode 120 and the second terminal 500 to each other. For example, the second connector may be a wire or a copper cable, like the first connector 200, and is not particularly limited as long as it is possible to electrically connect the second electrode 120 and the second terminal 500 to each other.

The second terminal 500 is connected to the second electrode 120 of the battery cell 100 received in the battery pack via the second connector 400, and is electrically connected to the external device to connect the battery cell 100 and the device to each other.

Here, the first terminal 300 and the second terminal 500 are connected to the device and serve as terminals for supplying power to the device in a normal operating state.

One side of the third connector 600 is connected to a part of the first connector 200 and extends therefrom, and the other side of the third connector is connected to the third terminal 700. No current flows in the third connector in the state in which the battery pack is normally operated.

An electrostatic force load element 610 is provided between the part of the third connector 600 connected to the first connector 200 and the part of the third connector 600 connected to the third terminal 700.

The electrostatic force load element 610 has substantially no resistance in normal operation when the third terminal 700 is connected to another terminal and current flows in the third connector 600, and has a function of cutting off the flow of current when the amount of current flowing in the third connector 600 reaches a preset power amount.

Such a function may be a function of breaking a connection line in the electrostatic force load element 610 through which current flows, wherein current is cut off when the amount of current reaches the preset power amount, whereby it is possible to prevent damage such as fire in the battery cell 100 due to excessive short circuit.

At this time, the preset power amount may be a power amount that can swell the battery cell 100 to a state in which the battery cell can be easily removed but is lower than a power amount that can cause fire, and the preset power amount may be set differently depending on the capacity of the battery cell 100, etc.

One side of the third terminal 700 is connected to the third connector 600, and the third terminal is not connected to any other terminal in a normal state but is electrically connected to the second terminal 500 when necessary, and causes short circuit in the battery cell 100 when electrically connected to the second terminal 500.

Here, the third terminal 700 may not be electrically connected to the other terminals in the absence of a separate connection member in a normal state, and accordingly no current may also flow in the third connector 600.

This is because the third terminal 700 is electrically connected only when performing operations, such as repair of the battery pack due to abnormality of the battery pack, replacement of the battery pack, and removal of the battery pack due to disposal of the device, causing short circuit.

In addition, the third terminal 700 is preferably not exposed to the outside, because, if the third terminal is exposed to the outside, the third terminal may come into contact with other components, causing unintended short circuit.

In the battery pack according to the present invention, a pull tape for separating the battery pack may be added so as to wrap around the front, opposite sides, and the rear of the battery pack, and it is possible to easily remove the battery pack by pulling a handle provided on the pull tape when the battery cell 100 swells due to short circuit.

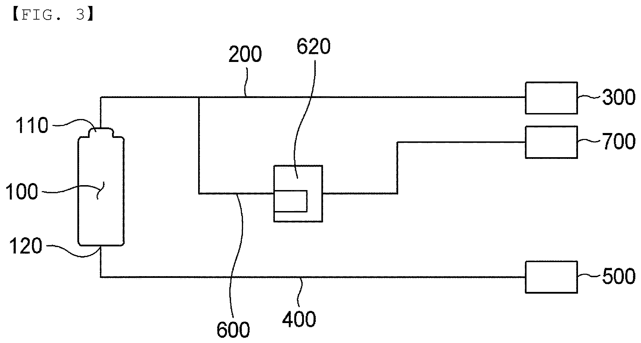

FIG. 3 is a schematic view showing a battery pack according to a second embodiment of the present invention.

Referring to FIG. 3, the battery pack according to the second embodiment is identical to the battery pack according to the first embodiment described with reference to FIG. 2, except that a temperature cut-off element 620 is provided at a third connector 600, and therefore a description of the same configuration will be omitted.

The battery pack according to the second embodiment of the present invention includes a battery cell 100, a first connector 200, a first terminal 300, a second connector 400, a second terminal 500, a third connector 600, and a third terminal 700.

A temperature cut-off element 620 is provided at the third connector 600 according to the second embodiment.

The temperature cut-off element 620 has substantially no resistance in normal operation when the second terminal 500 and the third terminal 700 are connected to each other, and has a function of cutting off the current flowing in the third connector 600 when the temperature of the battery cell 100 reaches a preset temperature value.

The preset temperature value may be set to be lower than the temperature at which the battery cell 100 swells and fire occurs in the battery cell due to short circuit, whereby it is possible to prevent damage such as fire due to short circuit while facilitating the removal of the battery cell 100.

At this time, the temperature cut-off element 620 may be further provided with a temperature sensor (not shown) capable of measuring the temperature of the battery cell 100 in order to cut off the flow of current based on the temperature of the battery cell 100.

The temperature cut-off element 620 may be configured in a structure having a fuse to omit the temperature sensor, and the fuse may cut off the current before fire or the like occurs in the battery cell 100 by applying different thicknesses and materials according to the degree of swelling to facilitate the removal of the battery cell 100.

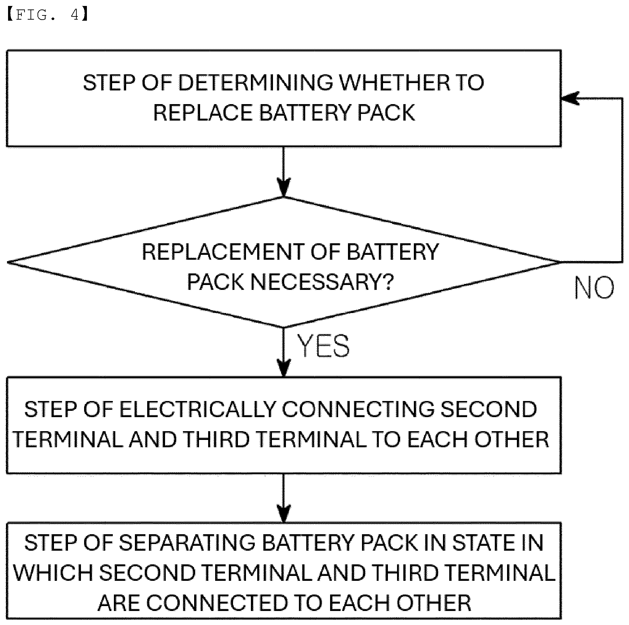

FIG. 4 is a flowchart showing a method of separating the battery pack according to the embodiment of the present invention from a device including the battery pack.

Referring to FIG. 4, the method of separating the battery pack according to the present invention from the device including the battery pack includes a first step of determining whether to replace the battery pack, a second step of electrically connecting the second terminal and the third terminal to each other, and a third step of separating the battery pack in the state in which the second terminal and the third terminal are connected to each other.

The first step of determining whether to replace the battery pack is a step of determining whether the battery pack needs to be replaced by checking the state of decreasing capacity of the battery pack due to the period of use and the number of charge and discharge cycles, the state of deteriorating performance, and the state of occurrence of defects such as lithium precipitation.

The second step of electrically connecting the second terminal and the third terminal to each other is a step of electrically connecting the second terminal and the third terminal to each other using a separately prepared connection member in addition to the battery pack.

The connection member may be made of an electrically conductive material, e.g., the same material as the first connector 200, the second connector 400, and the third connector 600, and is not particularly limited as long as it is possible to electrically connect the second terminal and the third terminal to each other.

The third terminal is not connected to the second terminal in a normal state and is electrically connected to the second terminal only via the connection member, and the minimum length of the connection member may be equal to or greater than the distance between the second terminal and the third terminal.

The connection member may be a bar-shaped length-adjustable member, and may have a structure in which the connection member is connected to one side of one of the second terminal and the third terminal and is movable a certain radius with respect to one side such that the other side can be connected to another terminal not connected to one side.

In addition, the connection member may be configured in the shape of a switch capable of adjusting the state in which the second terminal and the third terminal are electrically connected to each other.

That is, the second terminal and the third terminal are electrically connected to each other via the connection member when it is necessary to remove the battery pack, and short circuit occurs in the battery cell due to the electrical connection between the second terminal and the third terminal, whereby the battery cell swells, which facilitates the removal of the battery pack.

At this time, the electrostatic force load element or the temperature cut-off element provided at the third connector may prevent the occurrence of fire in the battery cell due to short circuit in the battery cell.

The third step of separating the battery pack in the state in which the second terminal and the third terminal are connected to each other is a step of separating the battery cell in the state in which the volume of the battery cell expands as a result of short circuit in the battery cell due to the connection between the second terminal and the third terminal via the connection member in the second step.

The battery cell that has expanded in volume due to the short circuit may be separated using the pull tape that additionally wraps around the battery cell.

The present invention provides a device including the battery pack, and the device may be, for example, a smartphone or an electric kickboard.

Those skilled in the art to which the present invention pertains will appreciate that various applications and modifications are possible within the scope of the present invention based on the above description.

### (Description of Reference Numerals)

100: Battery cell
110: First electrode
120: Second electrode
200: First connector
300: First terminal
400: Second connector
500: Second terminal
600: Third connector
610: Electrostatic force load element
620: Temperature cut-off element
700: Third terminal

## Claims

1. A battery pack comprising:
a battery cell having a first electrode and a second electrode;
a first connector extending from the first electrode, and one side of the first connector being electrically connected to the first electrode;
a first terminal connected to another side of the first connector;
a second connector extending from the second electrode, and one side of the second connector being electrically connected to the second electrode;
a second terminal connected to another side of the second connector;
a third connector extending from the first connector, and one side of the third connector being connected to a part of the first connector; and
a third terminal connected to another side of the third connector,
wherein the third connector includes an electrostatic force load element.

2. The battery pack according to claim 1, wherein the first electrode is a positive electrode, and the second electrode is a negative electrode.

3. The battery pack according to claim 1, wherein the electrostatic force load element has substantially no resistance in a normal operation, and is configured to cut off a current flowing in the third connector when an amount of the current reaches a preset power amount.

4. The battery pack according to claim 1, wherein the electrostatic force load element has substantially no resistance in a normal operation, and is configured to cut off a current flowing in the third connector when a temperature of the battery cell reaches a preset temperature value.

5. The battery pack according to claim 1, wherein the electrostatic force load element includes a fuse configured to be broken at a certain temperature or higher.

6. The battery pack according to claim 1, wherein a pull tape for separating the battery pack is added.

7. A device comprising the battery pack according to any one of claims 1 to 6.

8. A method of separating the battery pack according to any one of claims 1 to 6 from a device comprising the battery pack, the method comprising:
electrically connecting the second terminal and the third terminal to each other.

9. The method according to claim 8, wherein the second terminal and the third terminal are electrically connected to each other via a separate connection member.

10. The method according to claim 8, wherein the third terminal is configured to be electrically connected only via a separate connection member.
